# EUROPEAN PATENT SPECIFICATION

(11) **EP 1 557 967 B1**
(45) Date of publication and mention of the grant of the patent: **26.03.2008**
(21) Application number: 04001395.5
(22) Date of filing: 22.01.2004
(51) Int. Cl.: H04L 1/16

(54) **Method of HARQ retransmission timing control**
Verfahren zur HARQ-Wiederholungszeitsteuerung
Méthode pour commander la temporisation de retransmission HARQ

(43) Date of publication of application: 27.07.2005
(73) Proprietor: MATSUSHITA ELECTRIC INDUSTRIAL CO., LTD, Kadoma-shi, Osaka 571-8501 (JP)
(72) Inventor: Löhr, Joachim, 64295 Darmstadt (DE); Seidel, Eiko, 64285 Darmstadt (DE); Petrovic, Dragan, 64295 Darmstadt (DE)
(74) Representative: Grünecker, Kinkeldey, Stockmair & Schwanhäusser Anwaltssozietät

(56) References cited:
- US-A1- 2002 053 058
- US-A1- 2002 168 945
- US-A1- 2002 191 544

## Description

### Field of the Invention

The present invention relates to method for controlling the transmission timing of data retransmissions in a wireless communication system wherein a HARQ retransmission protocol, is used to retransmit data from a transmitting entity to a receiving entity via a data channel. Further the present invention relates to a base station, a mobile terminal and a communication system employing the present invention.

### Technical Background

W-CDMA (Wideband Code Division Multiple Access) is a radio interface for IMT-2000 (International Mobile Communication), which was standardized for use as the 3^{rd} generation wireless mobile telecommunication system. It provides a variety of services such as voice services and multimedia mobile communication services in a flexible and efficient way. The standardization bodies in Japan, Europe, USA, and other countries have jointly organized a project called the 3^{rd} Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4 and Release 5 and discussion on further improvements is ongoing under the scope of Release 6.

The dedicated channel (DCH) for downlink and uplink and the downlink shared channel (DSCH) have been defined in Release 99 and Release 4. In the following years, the developers recognized that for providing multimedia services - or data services in general - high speed asymmetric access had to be implemented. In Release 5 the high-speed downlink packet access (HSDPA) was introduced. The new high-speed downlink shared channel (HS-DSCH) provides downlink high-speed access to the user from the UMTS Radio Access Network (RAN) to the communication terminals, called user equipments in the UMTS specifications.

### Hybrid ARQ Schemes

The most common technique for error detection of non-real time services is based on Automatic Repeat reQuest (ARQ) schemes, which are combined with Forward Error Correction (FEC), called Hybrid ARQ. If Cyclic Redundancy Check (CRC) detects an error, the receiver requests the transmitter to send additional bits or a new data packet. From different existing schemes the stop-and-wait (SAW) and selective-repeat (SR) continuous ARQ are most often used in mobile communication.

A data unit will be encoded before transmission. Depending on the bits that are retransmitted three different types of ARQ may be defined.

In HARQ Type I the erroneous data packets received, also called PDUs (Packet Data Unit) are discarded and new copy of that PDU is retransmitted and decoded separately. There is no combining of earlier and later versions of that PDU. Using HARQ Type II the erroneous PDU that needs to be retransmitted is not discarded, but is combined with some incremental redundancy bits provided by the transmitter for subsequent decoding. Retransmitted PDU sometimes have higher coding rates and are combined at the receiver with the stored values. That means that only little redundancy is added in each retransmission.

Finally, HARQ Type III is almost the same packet retransmission scheme as Type II and only differs in that every retransmitted PDU is self-decodable. This implies that the PDU is decodable without the combination with previous PDUs. In case some PDUs are heavily damaged such that almost no information is reusable self decodable packets can be advantageously used.

When employing chase-combining the retransmission packets carry identical symbols. In this case the multiple received packets are combined either by a symbol-by-symbol or by a bit-by-bit basis (see D. Chase: "Code combining: A maximum-likelihood decoding approach for combining an arbitrary number of noisy packets", IEEE Transactions on Communications, Col. COM-33, pages 385 to 393, May 1985). These combined values are stored in the soft buffers of respective HARQ processes.

### Packet Scheduling

Packet scheduling may be a radio resource management algorithm used for allocating transmission opportunities and transmission formats to the users admitted to a shared medium. Scheduling may be used in packet based mobile radio networks in combination with adaptive modulation and coding to maximize throughput/capacity by e.g. allocating transmission opportunities to the users in favorable channel conditions. The packet data service in UMTS may be applicable for the interactive and background traffic classes, though it may also be used for streaming services. Traffic belonging to the interactive and background classes is treated as non real time (NRT) traffic and is controlled by the packet scheduler. The packet scheduling methodologies can be characterized by:
- **Scheduling period/frequency:** The period over which users are scheduled ahead in time.
- **Serve order:** The order in which users are served, e.g. random order (round robin) or according to channel quality (C/I or throughput based).
- **Allocation method:** The criterion for allocating resources, e.g. same data amount or same power/code/time resources for all queued users per allocation interval.

The packet scheduler for uplink is distributed between Radio Network Controller (RNC) and user equipment in 3GPP UMTS R99/R4/R5. On the uplink, the air interface resource to be shared by different users is the total received power at a Node B, and consequently the task of the scheduler is to allocate the power among the user equipment(s). In current UMTS R99/R4/R5 specifications the RNC controls the maximum rate/power a user equipment is allowed to transmit during uplink transmission by allocating a set of different transport formats (modulation scheme, code rate, etc.) to each user equipment.

The establishment and reconfiguration of such a TFCS (transport format combination set) may be accomplished using Radio Resource Control (RRC) messaging between RNC and user equipment. The user equipment is allowed to autonomously choose among the allocated transport format combinations based on its own status e.g. available power and buffer status. In current UMTS R99/R4/R5 specifications there is no control on time imposed on the uplink user equipment transmissions. The scheduler may e.g. operate on transmission time interval basis.

### UMTS Architecture

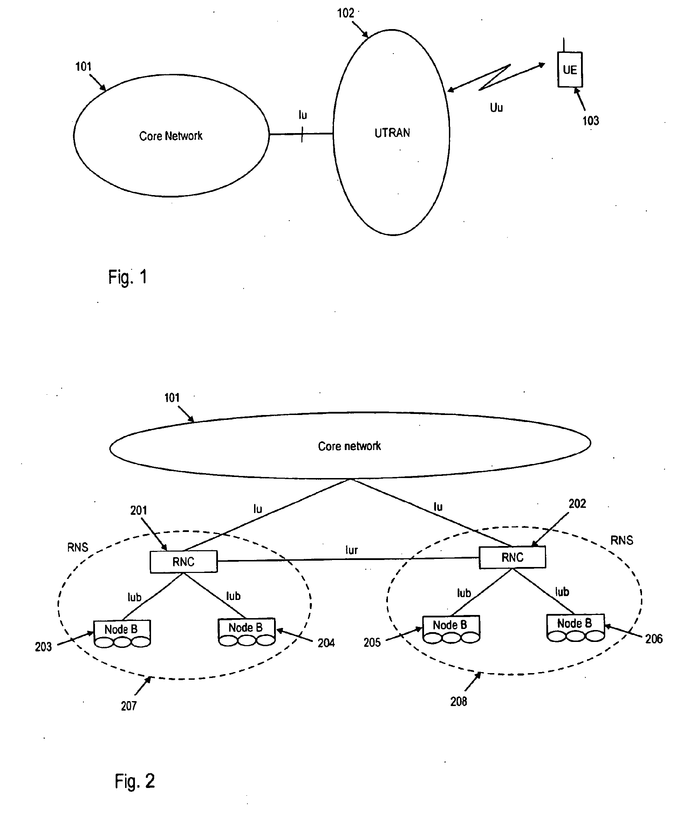

The high level R99/4/5 architecture of Universal Mobile Telecommunication System (UMTS) is shown in Fig. 1 (see 3GPP TR 25.401: "UTRAN Overall Description", available from http://www.3gpp.org). The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of these network elements are defined by open interfaces (Iu, Uu). It should be noted that UMTS system is modular and it is therefore possible to have several network elements of the same type.

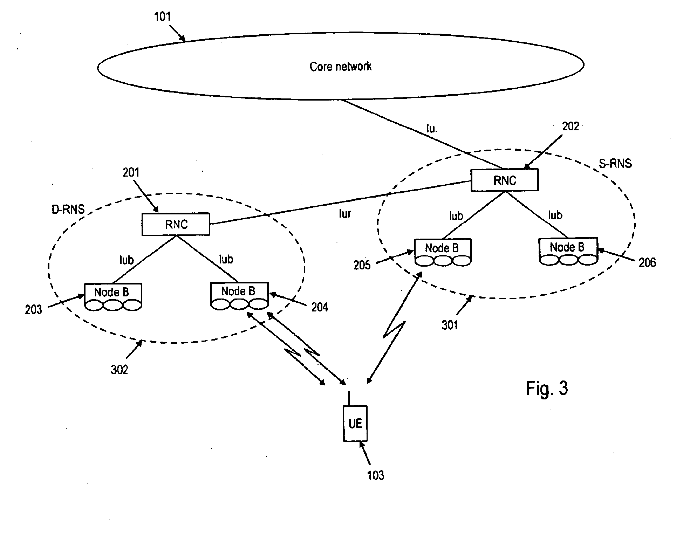

Fig. 2 illustrates the current architecture of UTRAN. A number of Radio Network Controllers (RNCs) 201, 202 are connected to the CN 101. Each RNC 201, 202 controls one or several base stations (Node Bs) 203, 204, 205, 206, which in turn communicate with the user equipments. An RNC controlling several base stations is called Controlling RNC (C-RNC) for these base stations. A set of controlled base stations accompanied by their C-RNC is referred to as Radio Network Subsystem (RNS) 207, 208. For each connection between User Equipment and the UTRAN, one RNS is the Serving RNS (S-RNS). It maintains the so-called lu connection with the Core Network (CN) 101. When required, the Drift RNS 302 (D-RNS) 302 supports the Serving RNS (S-RNS) 301 by providing radio resources as shown in Fig. 3. Respective RNCs are called Serving RNC (S-RNC) and Drift RNC (D-RNC). It is also possible and often the case that C-RNC and D-RNC are identical and therefore abbreviations S-RNC or RNC are used.

### Enhanced Uplink Dedicated Channel (E-DCH)

Uplink enhancements for Dedicated Transport Channels (DTCH) are currently studied by the 3GPP Technical Specification Group RAN (see 3GPP TR 25.896: "Feasibility Study for Enhanced Uplink for UTRA FDD (Release 6)", available at http://www.3gpp.org). Since the use of IP-based services become more important, there is an increasing demand to improve the coverage and throughput of the RAN as well as to reduce the delay of the uplink dedicated transport channels. Streaming, interactive and background services could benefit from this enhanced uplink.

One enhancement is the usage of adaptive modulation and coding schemes (AMC) in connection with Node B controlled scheduling, thus an enhancement of the Uu interface. In the existing R99/R4/R5 system the uplink maximum data rate control resides in the RNC. By relocating the scheduler in the Node B the latency introduced due to signaling on the interface between RNC and Node B may be reduced and thus the scheduler may be able to respond faster to temporal changes in the uplink load. This may reduce the overall latency in communications of the user equipment with the RAN. Therefore Node B controlled scheduling is capable of better controlling the uplink interference and smoothing the noise rise variance by allocating higher data rates quickly when the uplink load decreases and respectively by restricting the uplink data rates when the uplink load increases. The coverage and cell throughput may be improved by a better control of the uplink interference.

Another technique, which may be considered to reduce the delay on the uplink, is introducing a shorter TTI (Transmission Time Interval) length for the E-DCH compared to other transport channels. A transmission time interval length of 2ms is currently investigated for use on the E-DCH, while a transmission time interval of 10ms is commonly used on the other channels. Hybrid ARQ, which was one of the key technologies in HSDPA, is also considered for the enhanced uplink dedicated channel. The Hybrid ARQ protocol between a Node B and a user equipment allows for rapid retransmissions of erroneously received data units, and may thus reduce the number of RLC (Radio Link Control) retransmissions and the associated delays. This may improve the quality of service experienced by the end user.

To support enhancements described above, a new MAC sub-layer is introduced which will be called MAC-eu in the following (see 3GPP TSG RAN WG1, meeting #31, Tdoc R01-030284, "Scheduled and Autonomous Mode Operation for the Enhanced Uplink"). The entities of this new sub-layer, which will be described in more detail in the following sections, may be located in user equipment and Node B. On user equipment side, the MAC-eu performs the new task of multiplexing upper layer data (e.g. MAC-d) data into the new enhanced transport channels and operating HARQ protocol transmitting entities.

### E-DCH MAC Architecture at the user equipment

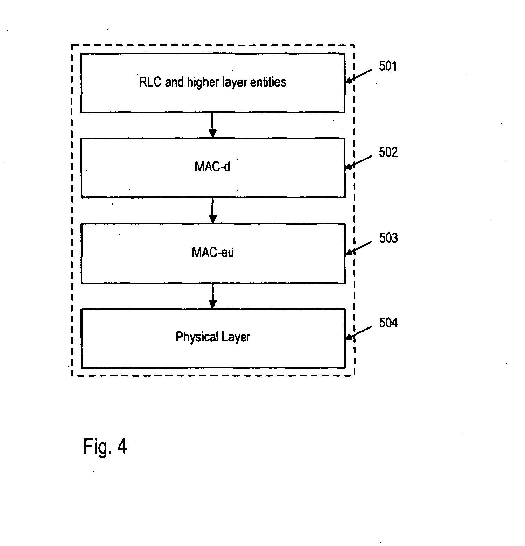

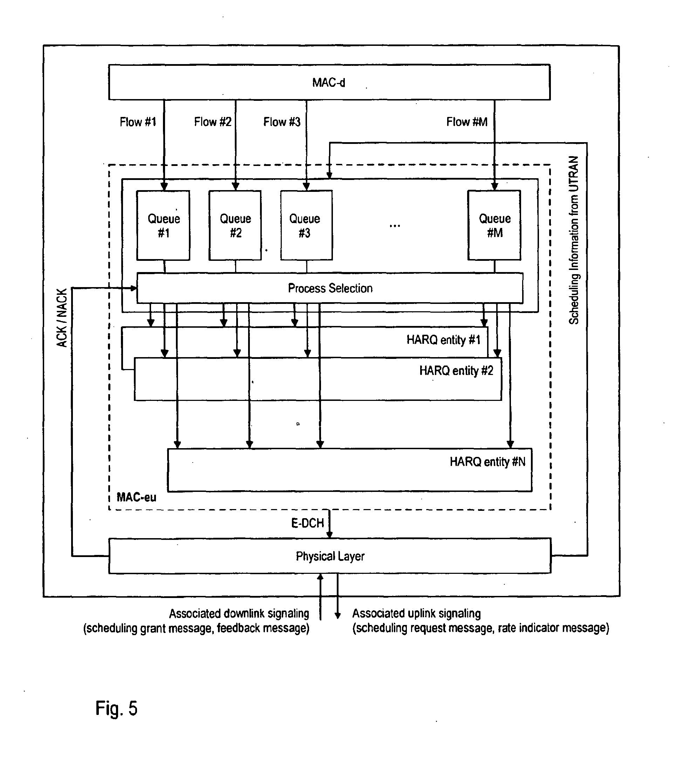

Fig. 4 shows the exemplary overall E-DCH MAC architecture on user equipment side. A new MAC functional entity, the MAC-eu 503, is added to the MAC architecture of Rel/99/4/5. The MAC-eu 503 entity is depicted in more detail in Fig. 5.

There are M different data flows (MAC-d) carrying data packets to be transmitted from user equipment to Node B. These data flows can have different QoS (Quality of Service), e.g. delay and error requirements, and may require different configurations of HARQ instances. Therefore the data packets can be stored in different Priority Queues. The set of HARQ transmitting and receiving entities, located in user equipment and Node B respectively will be referred to as HARQ process. The scheduler will consider QoS parameters in allocating HARQ processes to different priority queues. MAC-eu entity receives scheduling information from Node B (network side) via Layer 1 signaling.

### E-DCH MAC Architecture at the UTRAN

In soft handover operation the MAC-eu entities in the E-DCH MAC Architecture at the UTRAN side may be distributed across Node B (MAC-eub) and S-RNC (MAC-eur). The scheduler in Node B chooses the active users and performs rate control by determining and signaling a commanded rate, suggested rate or TFC (Transport Format Combination) threshold that limits the active user (UE) to a subset of the TCFS (Transport Format Combination Set) allowed for transmission.

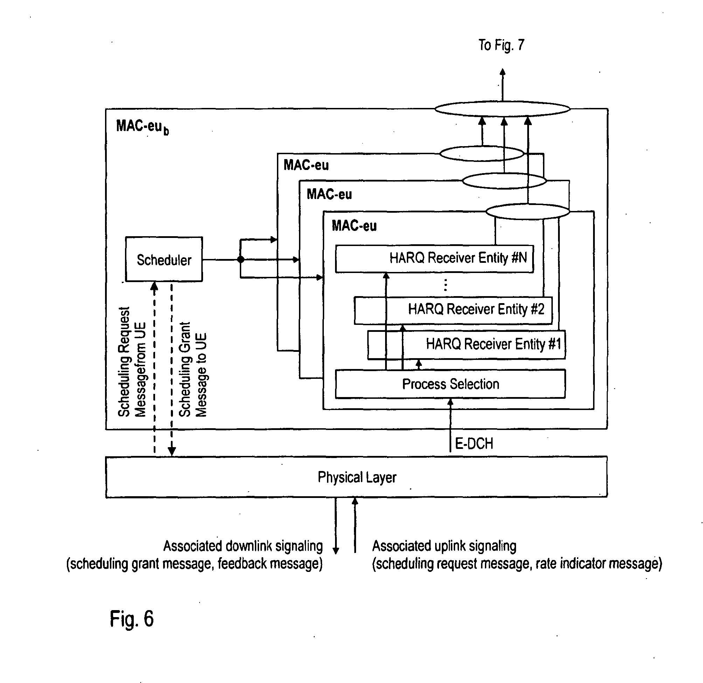

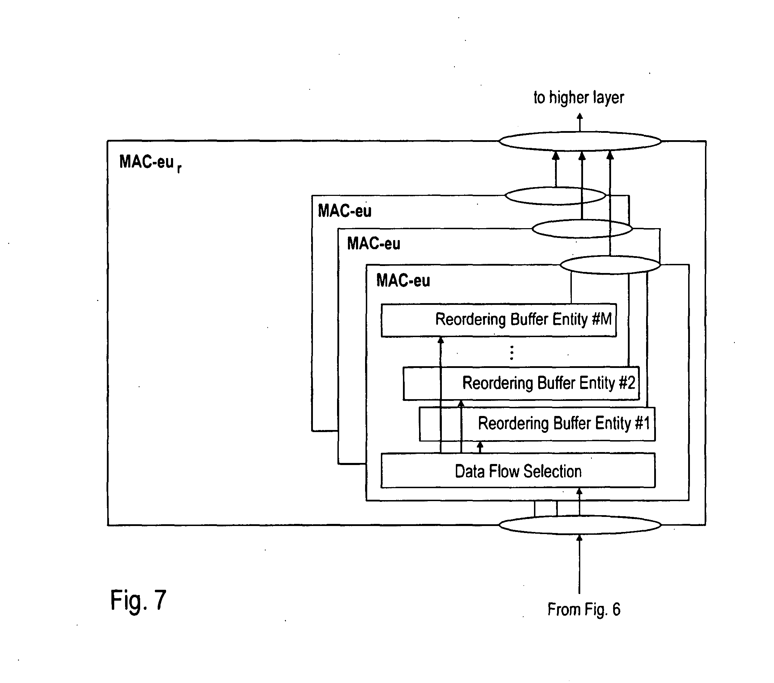

Every MAC-eu entity corresponds to a user (UE). In Fig. 6 the Node B MAC-eu architecture is depicted in more detail. It can be noted that each HARQ Receiver entity is assigned certain amount or area of the soft buffer memory for combining the bits of the packets from outstanding retransmissions. Once a packet is received successfully, it is forwarded to the reordering buffer providing the in-sequence delivery to upper layer. According to the depicted implementation, the reordering buffer resides in S-RNC during soft handover (see 3GPP TSG RAN WG 1, meeting #31: "HARQ Structure", Tdoc R1-030247, available of http://www.3gpp.org). In Fig. 7 the S-RNC MAC-eu architecture which comprises the reordering buffer of the corresponding user (UE) is shown. The number of reordering buffers is equal to the number of data flows in the corresponding MAC-eu entity on user equipment side. Data and control information is sent from all Node Bs within Active Set to S-RNC during soft handover.

It should be noted that the required soft buffer size depends on the used HARQ scheme, e.g. an HARQ scheme using incremental redundancy (IR) requires more soft buffer than one with chase combining (CC).

### E-DCH Signaling

E-DCH associated control signaling required for the operation of a particular scheme consists of uplink and downlink signaling. The signaling depends on uplink enhancements being considered.

In order to enable Node B controlled scheduling (e.g. Node B controlled time and rate scheduling), user equipment has to send some request message on the uplink for transmitting data to the Node B. The request message may contain status information of a user equipment e.g. buffer status, power status, channel quality estimate. The request message is in the following referred to as Scheduling Information (SI). Based on this information a Node B can estimate the noise rise and schedule the UE. With a grant message sent in the downlink from the Node B to the UE, the Node B assigns the UE the TFCS with maximum data rate and the time interval, the UE is allowed to send. The grant message is in the following referred to as Scheduling Assignment (SA).

In the uplink user equipment has to signal Node B with a rate indicator message information that is necessary to decode the transmitted packets correctly, e.g. transport block size (TBS), modulation and coding scheme (MCS) level, etc. Furthermore, in case HARQ is used, the user equipment has to signal HARQ related control information (e.g. Hybrid ARQ process number, HARQ sequence number referred to as New Data Indicator (NDI) for UMTS Rel. 5, Redundancy version (RV), Rate matching parameters etc.)

After reception and decoding of transmitted packets on enhanced uplink dedicated channel (E-DCH) the Node B has to inform the user equipment if transmission was successful by respectively sending ACK/NAK in the downlink.

### E-DCH - Node B controlled scheduling

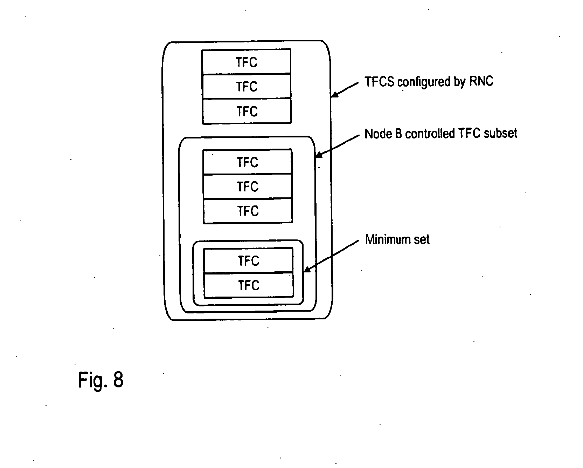

Node B controlled scheduling is one of the technical features for E-DCH which is foreseen to enable more efficient use of the uplink power resource in order to provide a higher cell throughput in the uplink and to increase the coverage. The term "Node B controlled scheduling" denotes the possibility for the Node B to control, within the limits set by the RNC, the set of TFCs from which the UE may choose a suitable TFC. The set of TFCs from which the UE may choose autonomously a TFC is in the following referred to as "Node B controlled TFC subset". "Node B controlled TFC subset" is a subset of the TFCS configured by RNC as seen in Fig. 8. The UE selects a suitable TFC from the "Node B controlled TFC subset" employing the Rel5 TFC selection algorithm. Any TFC in the "Node B controlled TFC subset" might be selected by the UE, provided there is sufficient power margin, sufficient data available and TFC is not in the blocked state. Two fundamental approaches to scheduling UE transmission for the E-DCH exist. The scheduling schemes can all be viewed as management of the TFC selection in the UE and mainly differs in how the Node B can influence this process and the associated signaling requirements.

### Node B controlled Rate Scheduling

The principle of this scheduling approach is to allow Node B to control and restrict the transport format combination selection of the user equipment by fast TFCS restriction control. A Node B may expand/reduce the "Node B controlled subset", which user equipment can choose autonomously on suitable transport format combination from, by Layer-1 signaling. In Node B controlled rate scheduling all uplink transmissions may occur in parallel but at a rate low enough such that the noise rise threshold at the Node B is not exceeded. Hence, transmissions from different user equipments may overlap in time. With Rate scheduling a Node B can only restrict the uplink TFCS but does not have any control of the time when UEs are transmitting data on the E-DCH. Due to Node B being unaware of the number of UEs transmitting at the same time no precise control of the uplink noise rise in the cell may be possible (see 3GPP TR 25.896: "Feasibility study for Enhanced Uplink for UTRA FDD (Release 6)", version 1.0.0, available at http://www.3gpp.org).

Two new Layer-1 messages are introduced in order to enable the transport format combination control by Layer-1 signaling between the Node B and the user equipment. A Rate Request (RR) may be sent in the uplink by the user equipment to the Node B. With the RR the user equipment can request the Node B to expand/reduce the "Node controlled TFC Subset" by one step. Further, a Rate Grant (RG) may be sent in the downlink by the Node B to the user equipment. Using the RG, the Node B may change the "Node B controlled TFC Subset", e.g. by sending up/down commands. The new "Node B controlled TFC Subset" is valid until the next time it is updated.

### Node B controlled Rate and Time Scheduling

The basic principle of Node B controlled time and rate scheduling is to allow (theoretically only) a subset of the user equipments to transmit at a given time, such that the desired total noise rise at the Node B is not exceeded. Instead of sending up/down commands to expand/reduce the "Node B controlled TFC Subset" by one step, a Node B may update the transport format combination subset to any allowed value through explicit signaling, e.g. by sending a TFCS indicator (which could be a pointer).

Furthermore, a Node B may set the start time and the validity period a user equipment is allowed to transmit. Updates of the "Node B controlled TFC Subsets" for different user equipments may be coordinated by the scheduler in order to avoid transmissions from multiple user equipments overlapping in time to the extent possible. In the uplink of CDMA systems, simultaneous transmissions always interfere with each other. Therefore by controlling the number of user equipments, transmitting simultaneously data on the E-DCH, Node B may have more precise control of the uplink interference level in the cell.

The Node B scheduler may decide which user equipments are allowed to transmit and the corresponding TFCS indicator on a per transmission time interval (TTI) basis based on, for example, buffer status of the user equipment, power status of the user equipment and available interference Rise over Thermal (RoT) margin at the Node B.

Two new Layer-1 messages are introduced in order to support Node B controlled time and rate scheduling. A Scheduling Information Update (SI) may be sent in the uplink by the user equipment to the Node B. If user equipment finds a need for sending scheduling request to Node B (for example new data occurs in user equipment buffer), a user equipment may transmit required scheduling information. With this scheduling information the user equipment provides Node B information on its status, for example its buffer occupancy and available transmit power.

A Scheduling assignment (SA) may be transmitted in the downlink from a Node B to a user equipment. Upon receiving the scheduling request the Node B may schedule a user equipment based on the scheduling information (SI) and parameters like available RoT margin at the Node B. In the Scheduling Assignment (SA) the Node B may signal the TFCS indicator and subsequent transmission start time and validity period to be used by the user equipment.

Node B controlled time and rate scheduling provides a more precise RoT control compared to the rate-only controlled scheduling as already mentioned before. However this more precise control of the interference at this Node B is obtained at the cost of more signaling overhead and scheduling delay (scheduling request and scheduling assignment messages) compared to rate control scheduling.

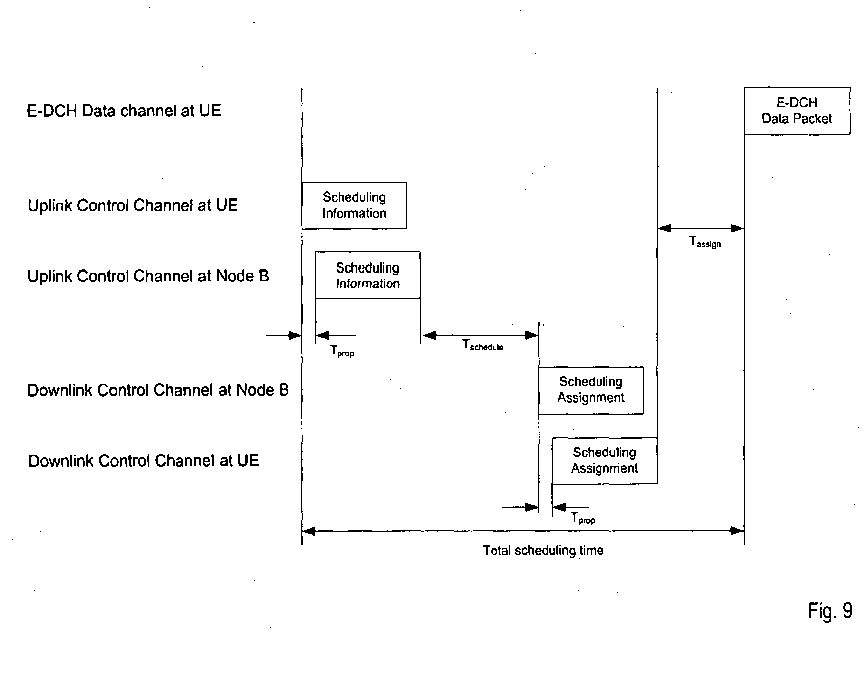

In Fig. 9 a general scheduling procedure with Node B controlled time and rate scheduling is shown. When a user equipment wants to be scheduled for transmission of data on E-DCH it first sends a scheduling request to Node B. Tₚᵣₒₚ denotes here the propagation time on the air interface. The contents of this scheduling request are information (scheduling information) for example buffer status and power status of the user equipment. Upon receiving that scheduling request, the Node B may process the obtained information and determine the scheduling assignment. The scheduling will require the processing time T_{schedule}.

The scheduling assignment, which comprises the TFCS indicator and the corresponding transmission start time and validity period, may be then transmitted in the downlink to the user equipment. After receiving the scheduling assignment the user equipment will start transmission on E-DCH in the assigned transmission time interval.

The use of either rate scheduling or time and rate scheduling may be restricted by the available power as the E-DCH will have to co-exist with a mix of other transmissions by the user equipments in the uplink. The co-existence of the different scheduling modes may provide flexibility in serving different traffic types. For example, traffic with small amount of data and/or higher priority such as TCP ACK/NACK may be sent using only a rate control mode with autonomous transmissions compared to using time and rate-control scheduling. The former would involve lower latency and lower signaling overhead.

### E-DCH - Hybrid ARQ

Node B controlled Hybrid ARQ may allow rapid retransmissions of erroneously received data packets. Fast retransmissions between a user equipment and a Node B may reduce the number of higher layer retransmissions and the associated delays, thus the quality perceived by the end user may be improved.

A protocol structure with multiple stop-and-wait (SAW) Hybrid ARQ processes can be used for E-DCH, similar to the scheme employed for the downlink HS-DSCH in HSDPA, but with appropriate modifications motivated by the differences between uplink and downlink (see 3GPP TR 25.896).

An N-channel SAW scheme consists of N parallel HARQ process, each process works as a stop-and-wait retransmission protocols, which corresponds to a selective repeat ARQ (SR) with window size 1. It is assumed that user equipment can only transmit data on a single HARQ process each transmission time interval.

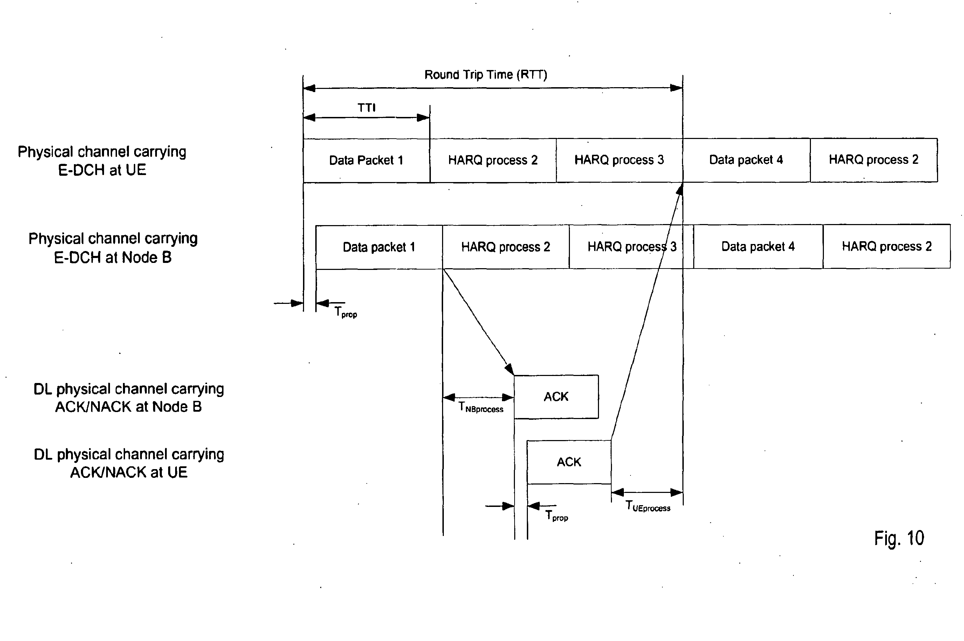

In Fig. 10 an example N-channel SAW protocol with N=3 HARQ processes is illustrated. A user equipment is transmitting data packet 1 on E-DCH on the uplink to the Node B. The transmission is carried out on the first HARQ process. After propagation delay of the air interface Tₚᵣₒₚ the Node B receives the packet and starts demodulating and decoding. Depending on whether the decoding was successful an ACK/NACK is sent in the downlink to the user equipment.

In this example Node B sends an ACK after T_{NBprocess}, which denotes the time required for decoding and processing the received packet in Node B, to the user equipment. Based on the feedback on the downlink the user equipment decides whether it resends the data packet or transmits a new data packet. The processing time available for the user equipment between receiving the ACKnowledgement and transmitting the next transmission time interval in the same HARQ process is denoted T_{UEprocess}.

In the example user equipment transmits data packet 4 upon receiving the ACK. The round trip time (RTT) denotes the time between transmission of a data packet in the uplink and sending a retransmission of that packet or a new data packet upon receiving the ACK/NACK feedback for that packet. To avoid idle periods due to lack of available HARQ processes, it is necessary that the number N of HARQ processes matches to the HARQ round trip time (RTT).

Considering known and unknown transmission timing, it may be distinguished between synchronous and asynchronous data transmission. A retransmission protocol with asynchronous data transmission uses an explicit signaling to identify a data block or the HARQ process, whereas in a protocol with synchronous data transmission, a data block or HARQ process is identified based on the time point a data block is received.

A UE may for example have to signal the HARQ process number explicitly in a protocol with asynchronous data transmission in order to ensure correct soft combining of data packets in case of a retransmission. The advantage of a HARQ retransmission protocol with asynchronous data transmission is the flexibility, which is given to the system. The Node B scheduler may for example assign UEs a time period and HARQ processes for the transmission of data on the E-DCH based on the interference situation in the cell and further parameters like priority or QoS parameters of the corresponding E-DCH service.

A retransmission protocol with asynchronous HARQ feedback information uses sequence numbers (SN) or other explicit identification of the feedback messages whereas protocols with synchronous HARQ feedback information identifies the feedback messages based on the time when they are received, as for example in HSDPA. Feedback may sent on the HS-DPCCH after a certain time instant upon having received the HS-DSCH (see 3GPP TR 25.848: "Physical Layer Aspects of High Speed Downlink Packet Access", version 5.0.0, available at http://www.3gpp.org).

As mentioned before, a retransmission protocol with asynchronous data transmission may enable a Node B to have more scheduling flexibility. The scheduling assignment may for example be based on the scheduling information sent from a UE and the interference situation in the cell. The different scheduling approaches considering retransmissions have to be taken into account, in order to enable further control of the uplink interference by the Node B scheduler (see e.g. 3GPP TSG TAN WG1#35: "Relationship between scheduling and HARQ", Tdoc R1-031224, available at http://www.3gpp.org).

A retransmission protocol with asynchronous uplink but synchronous retransmissions as described in the copending European application by the applicant "HARQ Protocol with Synchronous Retransmissions" (application serial no. 03029411.0, filed on December 19, 2003) is one approach, which may allow the scheduler more control on the noise rise in the cell. The transmission of new data packets on an E-DCH is sent in an asynchronous manner in order to keep the advantage of scheduling flexibility, though retransmissions are sent after a predefined time instant upon having received the NACK. The advantages of a retransmission protocol with synchronous retransmissions may also depend on the scheduling mode used.

In the rate controlled scheduling mode Node B may only be controlling the TFCS and the UE can choose among an appropriate TFC for the uplink transmissions. Node B may not have control on the UEs transmission time. There may also not be restrictions on the retransmission timing for the UE. When employing a retransmission protocol with synchronous retransmissions, a Node B may exactly know when the retransmissions are sent by UE, and may thus reserve uplink resources. The latter may enable the Node B to more precisely control the uplink interference in the cell.

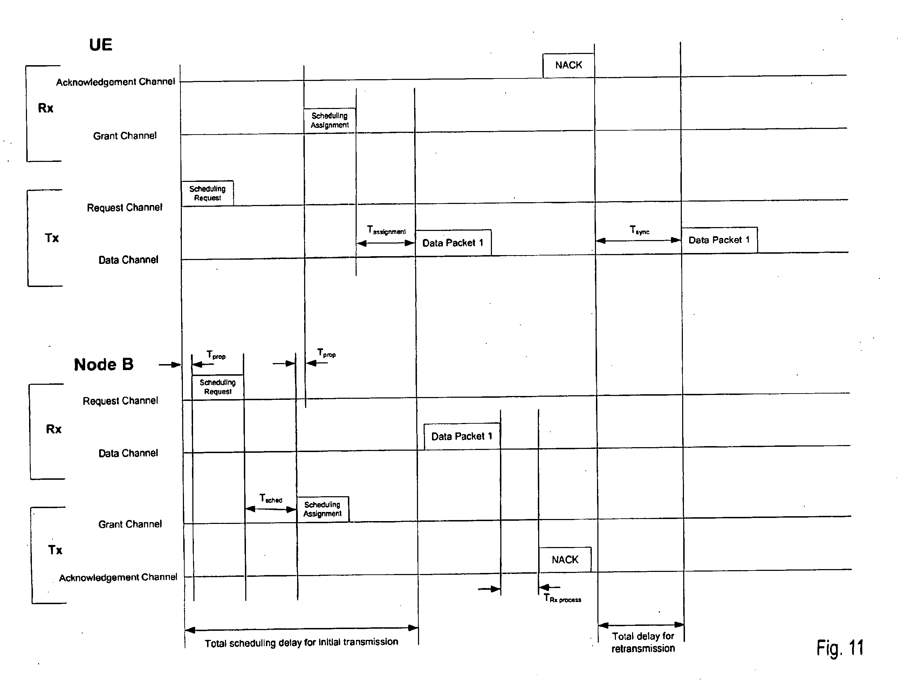

In the time and rate controlled scheduling mode Node B schedules the initial transmission of a data packet as well as the retransmissions related thereto. In case retransmissions are sent in a synchronous manner, the Node B may not need to schedule the retransmissions, which reduces the signaling overhead and the processing time for the scheduler in the Node B significantly. In Fig. 11 a transmission on E-DCH in time and rate controlled scheduling mode is shown. The retransmission is sent T_{sync} after having received the NACK. Thus, the UE does not need to monitor the grant channel for a scheduling assignment (SA) for the retransmission.

Due to the fact that retransmissions are always sent after receiving the NACK in this scenario (T_{sync}), there are delay benefits on UE side. In case retransmissions are also scheduled, a Node B may assign transmission resources to other UEs instead of scheduling the pending retransmissions.

As already mentioned before a HARQ retransmission protocol with asynchronous data transmission and synchronous retransmissions after a predefined time instant is assumed for transmission on e.g. an E-DCH.

The idea and the benefits gained from a retransmission protocol with synchronous retransmissions have been described in the previous section. However in some situations synchronous retransmissions may cause problems.

When the interference situation in the cell is critical due to heavy traffic, a lot of transmissions are most likely received in error. Therefore a number of simultaneous E-DCH transmissions will cause a corresponding number of retransmissions as a consequence. This may lead to severe problems, since - when using a HARQ protocol with synchronous retransmissions - the Node B has no control on the retransmission timing. Due to the fact that in the uplink of CDMA systems, simultaneous transmissions interfere with each other, the uplink interference in the cell is increased by the large number of retransmissions at a specific time instance.

Furthermore the UEs may increase the power for retransmissions as a result of the high interference in the cell in order to send the packet successfully. This will cause a further increase of the uplink noise rise. In order to maximize system throughput it is beneficial in CDMA to operate close to the maximum cell load. On the other side this could cause congestion and instability during fast variations of interference.

In another scenario there may be a situation in which other UEs need to transmit high priority data that may not be sent in parallel to the retransmissions due to a high interference level**.**

US 2002/168945 A1 relates to a method for controlling the transmission of data in a radio communication system in which response signals are transmitted from a receiver that include information that reflects received signal quality as well as information indicating whether an error has occurred in the data transmission. In one case, acknowledgement signals are used where negative acknowledgement signals may be regarded as no reply and not forwarded by a transmitter. In another case the signals could be recognized as an acknowledgement or retransmission request by a receiver. Preferably the signals transmitted from the receiver to the transmitter are composed of more than two bits.

The object of the present invention is to provide a timing control for data retransmissions in order to overcome at least one of the before mentioned problems.

The object is solved by the subject matter of the independent claims. Preferred embodiments of the present invention are subject matters to the dependent claims.

According to an aspect of the present invention the problem of synchronous retransmissions in interference critical situations may be mitigated by means of additional feedback from Node B sent in the downlink to the UE. This feedback information on the scheduling of retransmission may be combined with the HARQ feedback information.

In an embodiment of the present invention a method for controlling the transmission timing of data retransmissions in a wireless communication system is provided. In the wireless communication system a HARQ protocol is used to retransmit data from a transmitting entity to a receiving entity via a data channel. The receiving entity may receive a data packet from the transmitting entity, and may determine whether the data packet has been successfully received. For example, in interference critical situations within a cell, it is likely that a high number of data packets from different UEs are not successfully received. If these UEs would perform synchronous retransmissions a comparable high interference level in the cell would be the result at the time the retransmissions are transmitted.

If it has been determined that the data packet has not been successfully received, the receiving entity may further determine whether the interference level is above or equal to a predetermined threshold interference level. For example, the uplink interference level may be measured. According to a further embodiment, also the number of expected retransmissions may be taken as a measure for deciding whether to halt the retransmission process and to transmit the retransmission data packet at a later predefined point of time or whether to continue with their synchronous retransmission.

Next, the receiving entity may generate a feedback message, wherein the feedback message indicates to the transmitting entity to transmit a retransmission data packet for said received data packet after a first predetermined time span upon having received said feedback message (synchronous retransmission), if the determined interference level is below the predetermined threshold interference level.

If the determined interference level is above or equals the predetermined threshold interference level, the feedback message indicates to the transmitting entity to transmit a retransmission data packet for said received data packet after a second predetermined time span upon having received said feedback message. The second time span is larger than the first time span. Upon generating the feedback message, same may be transmitted to the transmitting entity.

In an alternative embodiment of the present invention, the receiving entity may also indicate to the transmitting entity in the feedback message that no synchronous retransmission should be performed for unsuccessfully received data packet at all in interference critical situations, but to abort the retransmission. Instead of performing synchronous retransmissions, a scheduling request may be transmitted by the transmitting entity to the receiving with arbitrary delay which may be larger than the second predetermined time interval mentioned above. The scheduling request may be used for requesting resources for the transmission of a retransmission data packet for the unsuccessfully received data packet. This may be especially applicable in the time and rate controlled scheduling mode. E.g. when operated in the rate controlled scheduling mode the transmitting entity may perform an autonomous retransmission with arbitrary delay which may be larger than second predetermined time interval mentioned above. Hence, in this alternative embodiment the provision of synchronous retransmissions may be aborted if an interference critical situation within the cell exists and - e.g. - a scheduling of the retransmission data may be performed instead when operated in a time and rate controlled scheduling mode. Which retransmission timing should be used is indicated in the feedback provided by the receiving entity.

A retransmission data packet may be a retransmission of the received data packet or may only comprise information providing a higher level of redundancy to the previously unsuccessfully received data packet, such that decoding may be possible after soft combining one or more retransmission data packets with the received data packet.

According to another embodiment, the receiving entity may schedule data transmissions of a plurality of transmitting entities comprising the transmitting entity, and may stop the scheduling of data transmissions from the plurality of transmitting entities, if the interference level is above or equal the predetermined threshold interference level. This embodiment may be especially applicable for a time and rate controlled scheduling mode for the transmitting entity.

When the interference level drops below the predetermined interference level, the scheduling by the receiving entity may be continued.

As explained above, using Node B controlled scheduling may be executed by controlling the "Node B controlled TFCS". According to another embodiment of the present invention the receiving entity may use a similar mechanism to reduce uplink interference. The receiving entity may control a transmission format combination subset of the transmitting entity, wherein the transmission format combination determines - among other attributes - the amount of data the transmitting entity is allowed to transmit, and may restrict the transmission format combination subset of the transmitting entity, if the determined interference level is above or equal to the predetermined threshold interference level. This embodiment may be especially suited for transmissions in the rate controlled scheduling mode.

According to another embodiment of the present invention, a common rate control message may be transmitted from the receiving entity to a plurality of transmitting entities comprising the transmitting entity, wherein the common rate control message restricts the transmission format combination subsets of each of the plurality of transmitting entities, thus restricting the maximum data rate to a data rate common to the plurality of transmitting entities for autonomous transmissions.

There may be different ways to transmit the feedback messages. The additional information introduced to the feedback message by taking into account the interference level may be combined with the HARQ feedback (ACK/NACK). For example a different code word for the HARQ feedback could be used, where the new feedback format NACK-H is encompassed (see for example table below).

The combined feedback (ACK/NACK/NACK-H) could also be combined with other signaling information, for example scheduling control signaling. In the latter case the combined feedback and the other signaling information may be encoded together.

Another alternative may be to signal the additional feedback on a different OVSF code i.e. channel, than the HARQ feedback (ACK/NACK)

Thus, feedback messages indicating the successful or the unsuccessful reception of a data packet may be transmitted via one control channel. Further, the information in the feedback messages may be combined with scheduling related control information and may be jointly encoded.

Alternatively, a further embodiment of the present invention proposes the use of different spreading codes, e.g. OVSF codes, for spreading negative feedback messages depending on the interference level in a cell. Thus, the feedback message may be spread using different OVSF codes in response to the feedback timing indicated by the feedback message. The additional feedback message (NACK-H) indicating a retransmission after the second time interval (or indicating to abort retransmission), may be signaled using a different spreading code, e.g. OVSF code, than the HARQ protocol feedback information (ACK, NACK).

A further embodiment of the present invention provides a method for controlling the transmission timing of data retransmissions in a wireless communication system. The communication system uses a HARQ protocol to retransmit data from a transmitting entity to a receiving entity via a data channel. According to the embodiment, the transmitting entity may transmit a data packet to the receiving entity, and may receive a feedback message for the transmitted data packet from the receiving entity.

The feedback message may indicate whether to the transmitting entity to transmit a retransmission data packet for said transmitted data packet after a first or a second predetermined time span upon having received said feedback message. For example the second time span may be larger than the first time span.

Next, the transmitting entity may transmit a retransmission data packet to said receiving entity after the first or the second predetermined time span upon having received said feedback message in response to said feedback message, i.e. dependent on the indication in said feedback message indicating the unsuccessful reception of the initially transmitted data packet, its retransmission is either transmitted upon elapse of the first or the second predetermined time period.

In a further embodiment, the transmitting entity may receive via the scheduling related control channel a common rate control message. The common rate control message may be used to restrict the transmission format combination subsets of each of a plurality of transmitting entities comprising said transmitting entity to a transmission format combination subset allowing a maximum data rate for autonomous transmission common to the plurality of transmitting entities.

When receiving a negative feedback setting the predetermined time interval to the second predetermined time interval, the transmitting entity may recognize that the interference level in the cell is critical. Thus, it may not be allowed to transmit - e.g. for a predetermined time interval - data or scheduling requests to the receiving entity autonomously in order to not unnecessarily further contribute to the cell's noise rise. I.e. only when granted resources from the receiving entity and in response to receiving a feedback message indicating to transmit a retransmission data packet for said received data packet after a second predetermined time span upon having received said feedback message, data packets and/or retransmission data packets may be only transmitted by the transmitting entity.

According to another embodiment, the present invention provides a base station in a wireless communication system using a HARQ protocol to retransmit data from a mobile terminal to the base station via a data channel. The base station may comprise receiving means for receiving a data packet from the transmitting entity and processing means for determining whether the data packet has been successfully received, wherein the processing means is adapted to determine whether the interference level is above or equal to a predetermined threshold interference level, if it has been determined that the data packet has not been successfully received.

Further, the base station may be provided with feedback message generation means for generating a feedback message, wherein the feedback message indicates to the transmitting entity to transmit a retransmission data packet for said received data packet after a first predetermined time span upon having received said feedback message, if the determined interference level is below the predetermined threshold interference level. If the determined interference level is above or equal to the predetermined threshold interference level, the feedback message indicates to the transmitting entity to transmit a retransmission data packet for said received data packet after a second predetermined time span upon having received said feedback message or to abort the retransmission. For example the second time span may be larger than the first time span.

Moreover the base station may comprise transmitting means for transmitting the feedback message to the transmitting entity.

In a further embodiment of the present invention, a base station adapted to perform the method according to the embodiments outlined above in relation to the receiving entity is provided.

Another embodiment of the present invention relates to a mobile terminal in a wireless communication system using a HARQ protocol to retransmit data from a mobile terminal to the base station via a data channel. The mobile terminal may comprise transmitting means for transmitting a data packet to the receiving entity, and receiving means for receiving a feedback message for the transmitted data packet from the receiving entity, wherein the feedback message indicates whether to the transmitting entity to transmit a retransmission data packet for said transmitted data packet after a first or a second predetermined time span upon having received said feedback message or to abort the retransmission. Further, the transmission means may be adapted to transmit a retransmission data packet to said receiving entity after the first or the second predetermined time span upon having received said feedback message in response to said feedback message.

In another embodiment of the present invention, a mobile terminal adapted to perform the method according to the embodiments outlined above in relation to the transmitting entity is provided.

Moreover, in another embodiment a wireless communication system using a HARQ protocol to retransmit data from a mobile terminal to the base station via a data channel is provided. The system may comprise at least one base station and at least one mobile terminal described above.

### Brief description of the Figures

In the following the present invention is described in more detail in reference to the attached figures and drawings. Similar or corresponding details in the figures are marked with the same reference numerals.
- **Fig. 1**: shows the high-level architecture of UMTS,
- **Fig. 2**: shows the architecture of the UTRAN according to UMTS R99/4/5,
- **Fig. 3**: shows a Drift and a Serving Radio Subsystem,
- **Fig. 4**: shows the E-DCH MAC architecture at a user equipment,
- **Fig. 5**: shows the MAC-eu architecture at a user equipment,
- **Fig. 6**: shows the MAC-eu architecture at a Node B,
- **Fig. 7**: shows the MAC-eu architecture at a RNC,
- **Fig. 8**: shows transport format combination sets for Node B controlled scheduling,
- **Fig. 9**: shows the operation of a time and rate controlled scheduling mode,
- **Fig. 10**: shows a the operation of a 3-channel stop-and-wait HARQ protocol,
- **Fig. 11**: shows the transmission timing for an HARQ protocol using synchronous retransmissions,
- **Fig. 12**: shows signaling of a NACK-H feedback message and the resulting transmissions according an embodiment of the present invention, and
- **Fig. 13**: shows a flow chart for controlling the timing of retransmissions according to an embodiment of the present invention.

### Detailed Description of the Invention

As explained above, according to an aspect of the present invention the problem of synchronous retransmissions in interference critical situations may be mitigated by means of additional feedback from Node B sent in the downlink to the UE.

When interference situation in the cell controlled by the Node B becomes critical, a large number of data packet transmissions may be received incorrectly due to the high uplink interference. A Node B may take measures against a further increase of the uplink interference level in the cell caused by synchronous retransmission. The new feedback information NACK-H(alt) may be signaled in the downlink from the Node B to the UE when a data packet is received incorrectly at the Node B and the uplink interference is at a critical level, i.e. larger than a predetermined threshold interference level.

A NACK-H indicates to the UE not to transmit the retransmission of the packet after the defined time T_{sync} upon having received a negative feedback such as NACK (synchronous retransmission), but to wait an additional predefined time before retransmitting the packet. In the following a brief description of the UE behavior and the Node B behavior according to this embodiment of the present invention is provided.

If a packet has been received incorrectly at a Node B and the uplink interference situation in the cell is critical, the Node B may decide to signal a NACK-H to the UE on the downlink. The information in this feedback message indicates to the UE to postpone the retransmission of the previously sent packet to a later predefined point of time than the point in time at which retransmissions are usually sent when employing synchronous retransmissions.

In another embodiment of the present invention, additionally to sending the NACK-H, the Node B may stop scheduling of UEs for new data transmission on E-DCH when scheduling is performed in a time and rate controlled mode until the noise rise situation in cell allows for new data traffic. The Node B may for example restrict the "Node B controlled TFC Subset" for the rate controlled scheduling mode in addition, in order to limit the uplink interference caused by autonomous UE transmissions. This may be for example done by a common rate control message, which reduces the TFCS for all UEs in the cell. Thus the maximum data rate a UE is allowed to transmit data autonomously is restricted for all UEs in the cell.

Once the NACK-H is received by the UE, same may abort the retransmission. The packet shall be retransmitted at a later predefined point time as outlined above. A possible time instant could be for example one HARQ transmission cycle after synchronous retransmission would have taken place. If for example a N-SAW HARQ protocol with N=6 channels and a TTI length of 2ms used, then one HARQ transmission cycle would be 12ms. In this exemplary embodiment the packet would be retransmitted T_{Halt} = T_{sync}+12ms after having received the NACK-H.

In an advantageous embodiment, T_{Halt} may be larger than T_{sync}. In particular, it may be desirable to transmit retransmission data as soon as possible, thus T_{sync} may be kept as small as possible.

Furthermore, the feedback information NACK-H may indicate to the UE that the uplink interference situation in the cell is critical. Therefore the UE may not be allowed to transmit data on E-DCH autonomously when scheduling is performed in a rate controlled mode or to transmit scheduling requests for a predefined time period to avoid additional uplink traffic.

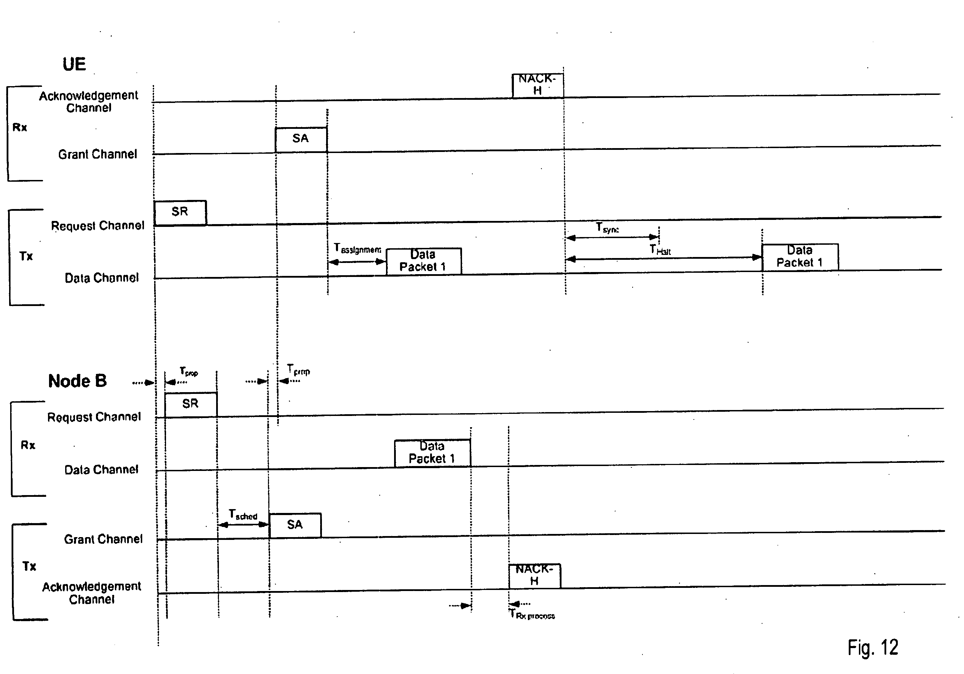

In Fig. 12 NACK-H related signaling according to an embodiment of the present invention is shown. The retransmission is sent T_{Halt} upon having received the NACK-H. T_{sync} denotes the time, after which the synchronous retransmission would have been taken place. Important to note is that the time period T_{Halt} is larger than the time period T_{sync} after which the retransmission would be usually transmitted when using synchronous transmission of feedback. Both time periods T_{sync} and T_{Halt} are used to define a point in time after the reception of the negative feedback, i.e. NACK for T_{sync} and NACK-H for T_{Halt}, delayed by the time period T_{sync} and T_{Halt} respectively.

In the current standardization procedure of UMTS, only a two-level feedback is foreseen for E-DCH in the downlink: ACKnowledgments and Negative ACKnowledgments (NACK). One possibility to encode a 1 bit acknowledgement indication is repetition coding, for example 10 copies of the indication bit. Introducing a third level for NACK-H may decrease the reliability of the feedback information.

Different mechanism may be used to extent the 1 bit ACK/NACK signal. One other possible solution could be to use a different spreading code, e.g. an Orthogonal Variable Spreading Factor (OVSF) code, for the ACK/NACK signal. The usage of the codes may be signaled or may be pre-defined. The UE may monitor and dispread all possible OVSF codes to obtain HARQ feedback information.

Another realization of this scheme may use a different code word for the ACK/NACK signal instead of using simple repetition. An example of using the code word of the ACK/NACK signaling with the additional NACK-H signal is shown in the table below.

| | |
|---|---|
| ACK | 1111111111 |
| NACK-H | 1010101010 |
| NACK | 0000000000 |

It may also be possible to send the ACK/NACK-H/NACK feedback simultaneously with further control signaling in the downlink, e.g. scheduling related control signaling. In this case the control information could be encoded together. Error correction codes, like turbo codes or convolutional codes, may be applied for the encoding of the control information.

According to a further embodiment of the present invention a NACK-H may indicate to the UE to abort the retransmission. In this case the data packet is not retransmitted at the later predefined point of time (T_{Halt}). If initial transmission was carried out in the rate controlled scheduling mode then UE may autonomously transmit the data packet again at a later point of time. In case initial transmission of the data packet was scheduled by Node B in a time and rate controlled scheduling mode, the UE may need to transmit a scheduling request for the transmission first and the Node B may in response schedule the transmission of this data packet again.

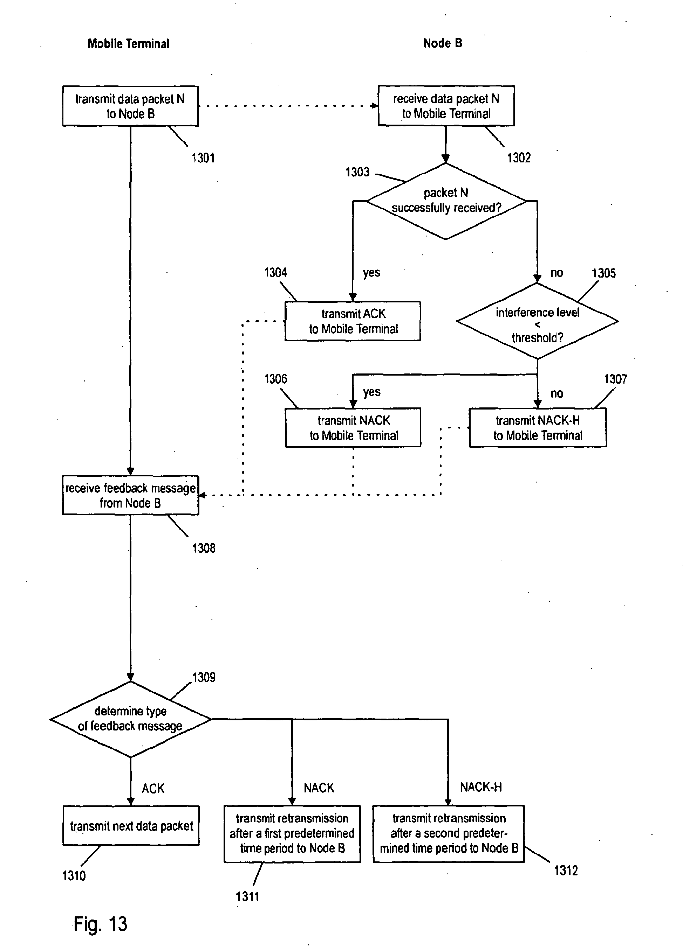

Fig. 13 shows a flow chart for controlling the timing of retransmissions according to an embodiment of the present invention. In step 1301 a mobile terminal transmits a data packet to a Node B. The Node B receives the data packet in step 1302 and determines in step 1303, whether the data packet has been successfully received.

If the data packet has been received without an error, the Node B may generate and transmit an acknowledgment ACK in step 1304 to inform the mobile terminal on the successful reception.

If an error has occurred in the transmission of the data packet, the Node B determines in step 1305 whether the current interference level in its cell is above or equal to a predetermined threshold interference level, i.e. whether an interference critical situation within the cell is present. If the interference level is below the threshold, the Node B may transmit a NACK to the mobile terminal in step 1306 to indicate the unsuccessful reception of the packet and to request a synchronous retransmission of the data packet.

In Node B determines in step 1305 that the interference level in the cell is above or equal to the threshold, a NACK-H is generated and transmitted to the mobile terminal in step 1307. As outlined before, the NACK-H indicates an unsuccessful reception of a data packet to the mobile terminal and instructs same to extend the time period after which a retransmission is issued upon receiving the feedback.

On the terminal side, the feedback message for the transmitted data packet is received in step 1308. Next, the mobile terminal may determine in step 1309 which type of feedback was sent by the Node B. In case the data packet has been successfully received at the Node B an ACK is received and the mobile terminal may continue to transmit the next data packet to the Node B in step 1310.

In case the data packet was not successfully received and the interference level in the Node B's cell has been acceptable, the Node B issued a NACK. In case the mobile terminal determined that a NACK has been received, it continues by sending a retransmission data packet after expiry of a first predetermined time period upon having received the feedback, i.e. provided synchronous retransmissions in step 1311.

If the data packet was not successfully received and the interference level in the Node B's cell has not been acceptable, the Node B issued a NACK-H. In this case the mobile terminal may transmit a retransmission data packet after expiry of a second predetermined time period upon having received the feedback in step 1312. As for example shown in Fig. 12, the second time period T_{Halt} is of longer duration than the first time period T_{Sync}.

It should be further noted that the dotted arrows in the figure are intended to indicate the transmission of data packets or feedback messages between the mobile terminal and the Node B and point to the blocks in which same are processed and/or interpreted.

The present invention may be especially applicable when a HARQ retransmissions protocol with synchronous retransmissions is assumed. Further, the present invention is especially applicable to HARQ Type II and Type III, i.e. HARQ protocols using soft combining of data packets and retransmissions.

It should be further noted that the present invention may be employed independent of the underlying access network structure, e.g. the Evolved UTRAN architecture or the Release 99/4/5 UTRAN architecture.

Moreover, it should be noted that the present invention is especially applicable to being employed in data transmissions on an E-DCH according to an embodiment of the present invention.

## Claims

1. A method for controlling the transmission timing of data retransmissions in a wireless communication system wherein a HARQ protocol is used to retransmit data from a transmitting entity to a receding entity via a data channel, wherein the following method steps are performed by the receiving entity:
receiving (1302) a data packet from the transmitting entity,
determining (1303) whether the data packet has been successfully received,
if it has been determined that the data packet has not been successfully received, determining (1305) whether the interference level is above or equal to a predetermined threshold interference level,
transmitting (1306, 1307) a feedback message to the transmitting entity wherein the feedback message indicates to the transmitting entity to transmit a retransmission data packet for said received data packet after a first predetermined time span upon having received said feedback message, if the determined interference level is below the predetermined threshold interference level, and
wherein the feedback message indicates to the transmitting entity to transmit a retransmission data packet for said received data packet after a second predetermined time span upon having received said feedback message or to abort a retransmission of said received data packet, if the determined interference level is above or equal to the predetermined threshold interference level,
scheduling data transmissions of a plurality of transmitting entities comprising said transmitting entity, and
transmitting a common rate control message to a plurality of transmitting entities comprising said transmitting entity, wherein the common rate control message restricts the transmission format combination subset of each of the plurality of transmitting entities to determine a maximum data rate common to the plurality of transmitting entities.

2. The method according to claim 1, wherein the second time span is larger than the first time span.

3. The method according to one of claims 1 to 2, further comprising the step of stopping the scheduling of data transmissions from said plurality of transmitting entities, if the interference level is above or equal to the predetermined threshold interference level.

4. The method according to claim 3, wherein scheduling is continued when the interference level drops below the predetermined threshold interference level.

5. The method according to one of claims 1 to 4, further comprising the steps of:
controlling a transmission format combination subset of the transmitting entity, wherein the transmission format combination determines the amount of data the transmitting entity (103) is allowed to transmit in a transmission time interval,
restricting the transmission format combination subset of the transmitting entity, if the determined interference level is above or equal to the predetermined threshold interference level.

6. The method according to claims 1 to 5, wherein feedback messages indicating the successful or the unsuccessful reception of a data packet are transmitted via one control channel.

7. The method according to claims 6, wherein the information in said feedback messages are combined with scheduling related control information and are jointly encoded.

8. The method according to one of claims 1 to 5, wherein the feedback message indicating to transmit the retransmission data packet after the second time interval upon having received the feedback message is signaled using a different OVSF code than the OVSF code used for signaling the feedback messages indicating either a successful reception of the received data packet or to transmit a retransmission data packet after the first predetermined time span.

9. A method for controlling the transmission timing of data retransmissions in a wireless communication system wherein a HARQ protocol is used to retransmit data from a transmitting entity to a receiving entity via a data channel, wherein the following method steps are performed by the transmitting entity:
transmitting (1301) a data packet to the receiving entity (204, 205),
receiving (1308) a feedback message for the transmitted data packet from the receiving entity (204, 205), wherein the feedback message indicates to the transmitting entity whether to transmit a retransmission data packet for said transmitted data packet after a first or a second predetermined time span upon having received said feedback message,
receiving via a scheduling related control channel a common rate control message, wherein the common rate control message restricts the transmission format combination subsets of each of a plurality of transmitting entities comprising said transmitting entity to determine a maximum data rate common to the plurality of transmitting entities
transmitting (1311, 1312) in response to said feedback message a retransmission data packet to said receiving entity after the first or the second predetermined time span upon having received said feedback message according to the restriction of the common rate control message.

10. The method according to claim 9, further comprising the step of stopping autonomous transmissions of data and scheduling requests for a predetermined time interval in response to receiving a feedback message indicating to transmit a retransmission data packet for said received data packet after the second predetermined time span upon having received said feedback message.

11. A method for controlling the transmission timing of data retransmissions in a wireless communication system wherein a HARQ protocol is used to retransmit data from a transmitting entity to a receiving entity via a data channel, wherein the following method steps are performed by the transmitting entity:
transmitting (1301) a data packet to the receiving entity (204, 205),
receiving a feedback message for the transmitted data packet from the receiving entity (204, 205), wherein the feedback message indicates to the transmitting entity whether to transmit a retransmission data packet for said transmitted data packet after a first predetermined time span upon having received said feedback message or to abort a retransmission of said received data packet,
receiving via a scheduling related control channel a common rate control message, wherein the common rate control message restricts the transmission format combination subsets of each of a plurality of transmitting entities comprising said transmitting entity to determine a maximum data rate common to the plurality of transmitting entities and
in response to said feedback message, transmitting a retransmission data packet to said receiving entity after the first predetermined time span upon having received said feedback message or aborting a retransmission of said received data packet according to the restriction of the common rate control message.

12. The method according to claim 11, the method further comprising the step of requesting resources for transmitting a retransmission data packet for the transmitted data packet by a scheduling request message transmitted to the receiving entity, if the feedback message indicates to abort retransmission for said received data packet.

13. The method according to claim 11, the method further comprising the step of transmitting a retransmission data packet for said transmitted data packet at a later point in time according to the time and rate controlled scheduling mode or the rate controlled scheduling mode.

14. A base station for a wireless communication system wherein a HARQ protocol is used to retransmit data from a mobile terminal to the base station via a data channel, the base station comprising:
receiving means for receiving a data packet from the transmitting entity,
processing means for determining whether the data packet has been successfully received,
wherein the processing means is adapted to determine whether the interference level is above or equal to a predetermined threshold interference level, if it has been determined that the data packet has not been successfully received,
transmitting means for transmitting a feedback message to the mobile terminal wherein the feedback message indicates to the mobile terminal to transmit a retransmission data packet for said received data packet after a first predetermined time span upon having received said feedback message, if the determined interference level is below the predetermined threshold interference level, and
wherein the feedback message indicates to the mobile terminal to transmit a retransmission data packet for said received data packet after a second predetermined time span upon having received said feedback message or to abort a retransmission of said received data packet, if the determined interference level is above or equal to the predetermined threshold interference level
wherein the base station is adapted to schedule data transmissions of a plurality of transmitting entities comprising said transmitting entity, and
wherein the transmitting entity is adapted to transmit a common rate control message to a plurality of transmitting entities comprising said transmitting entity, wherein the common rate control message restricts the transmission format combination subset of each of the plurality of transmitting entities to determine a maximum data rate common to the plurality of transmitting entities.

15. The base station according to claim 14, the base station being adapted to perform the method according to one of claims 1 to 8.

16. A mobile terminal for a wireless communication system wherein a HARQ protocol is used to retransmit data from the mobile terminal to a base station via a data channel, the mobile terminal comprising:
transmitting means for transmitting a data packet to the base station (204, 205),
receiving means for receiving a feedback message for the transmitted data packet from the base station, wherein the feedback message indicates to the transmitting entity whether to transmit a retransmission data packet for said transmitted data packet after a first or a second predetermined time span upon having received said feedback message, and for receiving via a scheduling related control channel a common rate control message, wherein the common rate control message restricts the transmission format combination subsets of each of a plurality of transmitting entities comprising said transmitting entity to determine a maximum data rate common to the plurality of transmitting entities
wherein the transmission means is adapted to transmit in response to the common rate control message, a retransmission data packet to said base station after the first or the second predetermined time span upon having received said feedback message in response to said feedback message according to the restriction of the common rate control message.

17. A mobile terminal for a wireless communication system wherein a HARQ protocol is used to retransmit data from the mobile terminal to a base station via a data channel, the mobile terminal comprising:
transmitting means for transmitting a data packet to the base station (204, 205),
receiving means for receiving a feedback message for the transmitted data packet from the base station (204, 205), wherein the feedback message indicates to the mobile terminal whether to transmit a retransmission data packet for said transmitted data packet after a first predetermined time span upon having received said feedback message or to abort a retransmission of said received data packet (NACK-H), and for receiving via a scheduling related control channel a common rate control message, wherein the common rate control message restricts the transmission format combination subsets of each of a plurality of transmitting entities comprising said transmitting entity to determine a maximum data rate common to the plurality of transmitting entities and
wherein the transmission means are adapted to transmit in response to the common rate control message, a retransmission data packet to said base station after the first predetermined time span upon having received said feedback message or to abort a retransmission of said received data packet in response to said feedback message according to the restriction of the common rate control message.

18. A wireless communication system wherein a HARQ protocol is used to retransmit data from a mobile terminal to the base station via a data channel, the system comprising at least one base station according to one of claims 14 or 15 and at least one mobile terminal according to claim 16 or 17.

## Patentansprüche

1. Verfahren zum Steuern des Übertragungstimings von Daten-Sendewiederholungen in einem Drahtlos-Kommunikationssystem, in dem ein HARQ-Protokoll verwendet wird, um erneut Daten von einer sendenden Einheit über einen Datenkanal zu einer empfangenden Einheit zu senden, wobei die folgenden Verfahrensschritte von der empfangenden Einheit durchgeführt werden:
Empfangen (1302) eines Datenpakets von der sendenden Einheit,
Feststellen (1303), ob das Datenpaket erfolgreich empfangen worden ist,
wenn festgestellt worden ist, dass das Datenpaket nicht erfolgreich empfangen worden ist, Feststellen (1305), ob der Interferenzpegel über oder auf einem vorgegebenen Schwellen-Referenzpegel liegt,
Senden (1306, 1307) einer Feedbacknachricht zu der sendenden Einheit, wobei die Feedbacknachricht der sendenden Einheit anzeigt, dass ein Sendewiederholungs-Datenpaket für das empfangene Datenpaket nach einer ersten vorgegebenen Zeitspanne nach Empfang der Feedbacknachricht zu senden ist, wenn der festgestellte Interferenzpegel unter dem vorgegebenen Schwellen-Interferenzpegel liegt, und
wobei die Feedbacknachricht der sendenden Einheit anzeigt, dass ein Sendewiederholungs-Datenpaket für das empfangene Datenpaket nach einer zweiten vorgegebenen Zeitspanne nach Empfang der Feedbacknachricht zu senden ist oder Abbrechen eine Sendewiederholung des empfangenen Datenpaketes abzubrechen ist, wenn der festgestellte Interferenzpegel über oder auf dem vorgegebenen Schwellen-Interferenzpegel liegt,
Koordinieren (scheduling) von Daten-Sendevorgänge einer Vielzahl sendender Einheiten, die die sendende Einheit bilden, und
Senden einer Steuernachricht (common rate control message) zu einer Vielzahl sendender Einheiten, die die sendende Einheit bilden, wobei die Steuernachricht das Transmission Format Combination Subset (TFCS) jeder der Vielzahl sendender Einheiten beschränkt, um eine für die der Vielzahl sendender Einheiten gemeinsame maximale Datenrate zu bestimmen.

2. Verfahren nach Anspruch 1, wobei die zweite Zeitspanne länger ist als die erste Zeitspanne.

3. Verfahren nach einem der Ansprüche 1 bis 2, das des Weiteren den Schritt des Unterbrechens der Koordinierung von Daten-Sendevorgängen von der Vielzahl sendender Einheiten umfasst, wenn der Interferenzpegel über oder auf dem vorgegebenen Schwellen-Interferenzpegel liegt.

4. Verfahren nach Anspruch 3, wobei Koordinierung fortgesetzt wird, wenn der Interferenzpegel unter den vorgegebenen Schwellen-Interferenzpegel fällt.

5. Verfahren nach einem der Ansprüche 1 bis 4, das des Weiteren die folgenden Schritte umfasst:
Steuern eines TFCS der sendenden Einheit, wobei die Transport Format Combination (TFC) die Menge an Daten bestimmt, die die sendende Einheit (103) in einem Sende-Zeitintervall senden darf,
Beschränken des TFCS der sendenden Einheit, wenn der bestimmte Interferenzpegel über oder auf dem vorgegebenen Schwellen-Interferenzpegel liegt.

6. Verfahren nach einem der Ansprüche 1 bis 5, wobei Feedbacknachrichten, die den erfolgreichen oder nicht erfolgreichen Empfang eines Datenpaketes anzeigen, über einen Steuerkanal gesendet werden.

7. Verfahren nach Anspruch 6, wobei die Informationen in den Feedbacknachrichten mit auf die Koordinierung bezogenen Steuerinformationen kombiniert werden und gemeinsam kodiert werden.

8. Verfahren nach einem der Ansprüche 1 bis 5, wobei die Feedbacknachricht, die Senden des Sendewiederholungs-Datenpaketes nach dem zweiten Zeitintervall nach Empfang der Feedbacknachricht anzeigt, unter Verwendung eines anderen OVSF-Codes als dem OVSF-Code signalisiert wird, der zum Signalisieren der Feedbacknachrichten verwendet wird, die entweder einen erfolgreichen Empfang des empfangenen Datenpaketes oder Senden eines Sendewiederholungs-Datenpaketes nach der ersten vorgegebenen Zeitspanne anzeigen.

9. Verfahren zum Steuern des Übertragungstimings von Daten-Sendewiederholungen in einem Drahtlos-Kommunikationssystem, in dem ein HARQ-Protokoll zum erneuten Senden von Daten von einer sendenden Einheit über einen Datenkanal zu einer empfangenden Einheit verwendet wird, wobei die folgenden Verfahrensschritte durch die sendende Einheit durchgeführt werden:
Senden (1301) eines Datenpaketes zu der empfangenden Einheit (204, 205),
Empfangen (1308) einer Feedbacknachricht für das gesendete Datenpaket von der empfangenden Einheit (204, 205), wobei die Feedbacknachricht der sendenden Einheit anzeigt, ob ein Sendewiederholungs-Datenpaket für das gesendete Datenpaket nach einer ersten oder einer zweiten vorgegebenen Zeitspanne nach Empfang der Feedbacknachricht zu senden ist,
Empfangen einer Steuernachricht (common rate control message) über einen auf Koordinierung bezogenen Steuerkanal, wobei die Steuernachricht die Transmission Format Combination Subsets (TFCS) jeder einer Vielzahl sendender Einheiten beschränkt, die die sendende Einheit bilden, um eine für die der Vielzahl sendender Einheiten gemeinsame maximale Datenrate zu bestimmen,
in Reaktion auf die Feedbacknachricht Senden (1311, 1312) eines Sendewiederholungs-Datenpaketes zu der empfangenden Einheit nach der ersten oder der zweiten Zeitspanne nach Empfang der Feedbacknachricht entsprechend der Beschränkung der Steuernachricht.

10. Verfahren nach Anspruch 9, das des Weiteren den Schritt des Unterbrechens autonomer Sendevorgänge von Daten und Koordinierungs-Anforderungen über ein vorgegebenes Zeitintervall in Reaktion auf Empfangen einer Feedbacknachricht umfasst, die anzeigt, dass ein Sendewiederholungs-Datenpaket für das empfangene Datenpaket nach der zweiten vorgegebenen Zeitspanne nach Empfang der Feedbacknachricht zu senden ist.

11. Verfahren zum Steuern des Übertragungstimings von Daten-Sendewiederholungen in einem Drahtlos-Kommunikationssystem, in dem ein HARQ-Protokoll verwendet wird, um erneut Daten von einer sendenden Einheit über ein Datenkanal zu einer empfangenden Einheit zu senden, wobei die folgenden Verfahrensschritte von der sendenden Einheit durchgeführt werden:
Senden (1301) eines Datenpaketes zu der empfangenden Einheit (204, 205),
Empfangen einer Feedbacknachricht für das gesendete Datenpaket von der empfangenden Einheit (204, 205), wobei die Feedbacknachricht der sendenden Einheit anzeigt, ob ein Sendewiederholungs-Datenpaket für das gesendete Datenpaket nach einer ersten vorgegebenen Zeitspanne nach Empfang der Feedbacknachricht zu senden ist oder eine Sendewiederholung des empfangenen Datenpaketes abzubrechen ist,
Empfangen einer Steuernachricht (common rate control message) über einen auf Koordinierung bezogenen Steuerkanal, wobei die Steuernachricht die Transmission Format Combination Subsets (TFCS) jeder einer Vielzahl sendender Einheiten, die sendende Einheit beinhaltet, beschränkt, um eine für die der Vielzahl sendender Einheiten gemeinsame maximale Datenrate zu bestimmen, ist, und
in Reaktion auf die Feedbacknachricht Senden eines Sendewiederholungs-Datenpaketes zu der empfangenden Einheit nach der ersten vorgegebenen Zeitspanne nach Empfang der Feedbacknachricht oder Abbrechen einer Sendewiederholung des empfangenen Datenpaketes entsprechend der Beschränkung der Steuernachricht.

12. Verfahren nach Anspruch 11, wobei das Verfahren des Weiteren den Schritt des Anforderns von Ressourcen zum Senden eines Sendewiederholungs-Datenpaketes für das gesendete Datenpaket durch eine zu der empfangenden Einheit gesendete Koordinierungs-Anforderungsnachricht umfasst, wenn die Feedbacknachricht anzeigt, dass Sendewiederholung für das empfangene Datenpaket abzubrechen ist.

13. Verfahren nach Anspruch 11, wobei das Verfahren des Weiteren den Schritt des Sendens eines Sendewiederholungs-Datenpaketes für das gesendete Datenpaket zu einem späteren Zeitpunkt entsprechend dem Time-and-Rate Controlled Scheduling Modus oder dem Rate Controlled Scheduling Modus umfasst.

14. Basisstation für ein Drahtlos-Kommunikationssystem, in dem ein HARQ-Protokoll verwendet wird, um erneut Senden von Daten von einem Mobil-Endgerät über einen Datenkanal zu der Basisstation zu senden, wobei die Basisstation umfasst:
eine Empfangseinrichtung zum Empfangen eines Datenpaketes von der sendenden Einheit,
eine Verarbeitungseinrichtung, die feststellt, ob das Datenpaket erfolgreich empfangen worden ist,
wobei die Verarbeitungseinrichtung so eingerichtet ist, dass sie feststellt, ob der Interferenzpegel über oder auf einen vorgegebenen Schwellen-Interferenzpegel liegt, wenn festgestellt worden ist, dass das Datenpaket nicht erfolgreich empfangen worden ist,
eine Sendeeinrichtung zum Senden einer Feedbacknachricht zu dem Mobil-Endgerät, wobei die Feedbacknachricht dem Mobil-Endgerät anzeigt, dass ein Sendewiederholungs-Datenpaket für das empfangene Datenpaket nach einer ersten vorgegebenen Zeitspanne nach Empfang der Feedbacknachricht zu senden ist, wenn der festgestellte Interferenzpegel unter dem vorgegebenen Schwellen-Interferenzpegel liegt, und
wobei die Feedbacknachricht dem Mobil-Endgerät anzeigt, dass ein Sendewiederholungs-Datenpaket für das empfangene Datenpaket nach einer zweiten vorgegebenen Zeitspanne nach Empfang der Feedbacknachricht zu senden ist oder eine Sendewiederholung des empfangenen Datenpaketes abzubrechen ist, wenn der festgestellte Interferenzpegel über oder auf dem vorgegebenen Schwellen-Interferenzpegel liegt,
wobei die Basisstation so eingerichtet ist, dass sie Daten-Sendevorgänge einer Vielzahl sendender Einheiten, die die sendende Einheit umfassen, koordiniert, und
wobei die sendende Einheit so eingerichtet ist, dass sie eine Steuernachricht (common rate control message) zu einer Vielzahl sendender Einheiten sendet, die die sendende Einheit beinhaltet, und die Steuernachricht das Transmission Format Combination Subset jeder der Vielzahl sendender Einheiten beschränkt, um eine maximale für die der Vielzahl sendender Einheiten gemeinsame Datenrate zu bestimmen.

15. Basisstation nach Anspruch 14, wobei die Basisstation so eingerichtet ist, dass sie das Verfahren nach einem der Ansprüche 1 bis 8 durchführt.

16. Mobil-Endgerät für ein Drahtlos-Kommunikationssystem, in dem ein HARQ-Protokoll verwendet wird, um erneut Daten von dem Mobil-Endgerät über einen Datenkanal zu einer Basisstation zu senden, wobei das Mobil-Endgerät umfasst:
eine Sendeeinrichtung zum Senden eines Datenpaketes zu der Basisstation (204, 205),
eine Empfangseinrichtung zum Empfangen einer Feedbacknachricht für das gesendete Datenpaket von der Basisstation, wobei die Feedbacknachricht der sendenden Einheit anzeigt, ob ein Sendewiederholungs-Datenpaket für das gesendete Datenpaket nach einer ersten oder einer zweiten vorgegebenen Zeitspanne nach Empfang der Feedbacknachricht zu senden ist, und zum Empfangen einer Steuernachricht (common rate control message) über einen auf Koordinierung bezogenen Steuerkanal, wobei die Steuernachricht die Transport Format Combination Subsets jeder einer Vielzahl sendender Einheiten, die die sendende Einheit beinhaltet, beschränkt, um eine maximale für die der Vielzahl sendender Einheiten gemeinsame Datenrate zu bestimmen,
wobei die Sendeeinrichtung so eingerichtet ist, dass sie in Reaktion auf die Steuernachricht ein Sendewiederholungs-Datenpaket zu der Basisstation nach der ersten oder der zweiten vorgegebenen Zeitspanne nach Empfang der Feedbacknachricht in Reaktion auf die Feedbacknachricht entsprechend der Beschränkung der Steuernachricht sendet.

17. Mobil-Endgerät für ein Drahtlos-Kommunikationssystem, in dem ein HARQ-Protokoll verwendet wird, um erneut Daten von dem Mobil-Endgerät über einen Datenkanal zu einer Basisstation zu senden, wobei das Mobil-Endgerät umfasst:
eine Sendeeinrichtung zum Senden eines Datenpaketes zu der Basisstation (204, 205),
eine Empfangseinrichtung zum Empfangen einer Feedbacknachricht für das gesendete Datenpaket von der Basisstation (204, 205), wobei die Feedbacknachricht dem Mobil-Endgerät anzeigt, ob ein Sendewiederholungs-Datenpaket für das gesendete Datenpaket nach einer ersten vorgegebenen Zeitspanne nach Empfang der Feedbacknachricht zu senden ist oder eine Sendewiederholung des empfangenen Datenpaketes abzubrechen ist (NACK-H), und zum Empfangen einer Steuernachricht (common rate control message) über einen auf Koordinierung bezogenen Steuerkanal, wobei die Steuernachricht die Transmission Format Combination Subsets jeder einer Vielzahl sendender Einheiten, die die sendende Einheit beinhaltet, beschränkt, um eine maximale für die der Vielzahl sendender Einheiten gemeinsame Datenrate zu bestimmen, und
wobei die Sendeeinrichtung so eingerichtet ist, dass sie in Reaktion auf die Steuernachricht entsprechend der Beschränkung der Steuernachricht ein Sendewiederholungs-Datenpaket zu der Basisstation nach der ersten vorgegebenen Zeitspanne nach Empfang der Feedbacknachricht sendet oder eine Sendewiederholung des empfangenen Datenpaketes in Reaktion auf die Feedbacknachricht abbricht.

18. Drahtlos-Kommunikationssystem, wobei ein HARQ-Protokoll benutzt wird, um Daten von einem Mobil-Endgerät über einen Datenkanal erneut zu der Basisstation zu senden, und das System wenigstens eine Basisstation nach einem der Ansprüche 14 oder 15 sowie wenigstens ein Mobil-Endgerät nach Anspruch 16 oder 17 umfasst.

## Revendications

1. Procédé pour commander le minutage de transmission de retransmissions de données dans un système de communication sans fil dans lequel un protocole HARQ est utilisé pour retransmettre des données d'une entité émettrice à une entité réceptrice à travers un canal de données, où les étapes suivantes du procédé sont effectuées par l'entité réceptrice
recevoir (1302) un paquet de données de l'entité émettrice,
déterminer (1303) si le paquet de données a été reçu avec succès,
s'il a été déterminé que le paquet de données n'a pas été reçu avec succès, déterminer (1305) si le niveau d'interférence est au dessus ou égal à un niveau d'interférence seuil prédéterminé,
transmettre (1306, 1307) un message de retour à l'entité émettrice où le message de retour indique à l'entité émettrice de transmettre un paquet de données de retransmission pour ledit paquet de données reçu après un premier laps de temps prédéterminé après avoir reçu ledit message de retour, si le niveau d'interférence déterminé est inférieur au niveau d'interférence seuil prédéterminé, et
où le message de retour indique à l'entité émettrice de transmettre un paquet de données de retransmission pour ledit paquet de données reçu après un deuxième laps de temps prédéterminé après avoir reçu ledit message de retour ou d'abandonner une retransmission dudit paquet de données reçu, si le niveau d'interférence déterminé est supérieur ou égal au niveau d'interférence seuil prédéterminé,
planifier des transmissions de données d'une pluralité d'entités émettrices comprenant ladite entité émettrice, et
transmettre un message de commande de débit commun à une pluralité d'entités émettrices comprenant ladite entité émettrice, où le message de commande de débit commun limite le sous-ensemble de combinaison de formats de transmission de chacune de la pluralité d'entités émettrices pour déterminer un débit de données maximal commun à la pluralité d'entités émettrices.

2. Procédé selon la revendication 1, dans lequel le deuxième laps de temps est supérieur au premier laps de temps.

3. Procédé selon l'une des revendications 1 à 2, comprenant en plus l'étape consistant à arrêter la planification de transmissions de données à partir de ladite pluralité d'entités émettrices, si le niveau d'interférence est supérieur ou égal au niveau d'interférence seuil prédéterminé.

4. Procédé selon la revendication 3, dans lequel on poursuit la planification lorsque le niveau d'interférence tombe sous le niveau d'interférence seuil prédéterminé.

5. Procédé selon l'une des revendications 1 à 4, comprenant en plus les étapes consistant à:
commander un sous-ensemble de combinaison de formats de transmission de l'entité émettrice, où la combinaison de formats de transmission détermine la quantité de données que l'entité émettrice (103) est habilitée à transmettre dans un intervalle de temps de transmission,
limiter le sous-ensemble de combinaison de formats de transmission de l'entité émettrice, si le niveau d'interférence déterminé est supérieur ou égal au niveau d'interférence seuil prédéterminé.

6. Procédé selon les revendications 1 à 5, dans lequel des messages de retour indiquant la réception réussie ou non réussie d'un paquet de données sont transmis à travers un canal de commande.

7. Procédé selon la revendication 6, dans lequel les informations dans lesdits messages de retour sont combinées avec des informations de commande se rapportant à une planification et sont conjointement codées.

8. Procédé selon l'une des revendications 1 à 5, dans lequel le message de retour indiquant de transmettre le paquet de données de retransmission après le deuxième intervalle de temps après avoir reçu le message de retour est signalisé en utilisant un code OVSF différent du code OVSF utilisé pour signaliser les messages de retour indiquant soit une réception réussie du paquet de données reçu soit de transmettre un paquet de données de retransmission après le premier laps de temps prédéterminé.

9. Procédé pour commander le minutage de transmission de retransmissions de données dans un système de communication sans fil dans lequel un protocole HARQ est utilisé pour retransmettre des données d'une entité émettrice à une entité réceptrice à travers un canal de données, où les étapes suivantes du procédé sont effectuées par l'entité émettrice :
transmettre (1301) un paquet de données à l'entité réceptrice (204, 205),
recevoir (1308) un message de retour pour le paquet de données transmis de l'entité réceptrice (204, 205), où le message de retour indique à l'entité émettrice si elle doit transmettre un paquet de données de retransmission pour ledit paquet de données transmis après un premier ou un deuxième laps de temps prédéterminé après avoir reçu ledit message de retour,
recevoir à travers un canal de commande se rapportant à une planification un message de commande de débit commun, où le message de commande de débit commun limite les sous-ensembles de combinaison de formats de transmission de chacune d'une pluralité d'entités émettrices comprenant ladite entité émettrice pour déterminer un débit de données maximal commun à la pluralité d'entités émettrices,
transmettre (1311, 1312) en réponse audit message de retour un paquet de données de retransmission à ladite entité réceptrice après le premier ou le deuxième laps de temps prédéterminé après avoir reçu ledit message de retour selon la limitation du message de commande de débit commun.

10. Procédé selon la revendication 9, comprenant en plus l'étape consistant à arrêter des transmissions autonomes de données et à planifier des demandes pendant un intervalle de temps prédéterminé en réponse à la réception d'un message de retour indiquant de transmettre un paquet de données de retransmission pour ledit paquet de données reçu après le deuxième laps de temps prédéterminé après avoir reçu ledit message de retour.

11. Procédé pour commander le minutage de transmission de retransmissions de données dans un système de communication sans fil dans lequel un protocole HARQ est utilisé pour retransmettre des données d'une entité émettrice à une entité réceptrice à travers un canal de données, où les étapes suivantes du procédé sont effectuées par l'entité émettrice:
transmettre (1301) un paquet de données à l'entité réceptrice (204, 205),
recevoir un message de retour pour le paquet de données transmis de l'entité réceptrice (204, 205), où le message de retour indique à l'entité émettrice si elle doit transmettre un paquet de données de retransmission pour ledit paquet de données transmis après un premier laps de temps prédéterminé après avoir reçu ledit message de retour ou abandonner une retransmission dudit paquet de données reçu,
recevoir à travers un canal de commande se rapportant à une planification un message de commande de débit commun, où le message de commande de débit commun limite les sous-ensembles de combinaison de formats de transmission de chacune d'une pluralité d'entités émettrices comprenant ladite entité émettrice pour déterminer un débit de données maximal commun à la pluralité d'entités émettrices et
en réponse audit message de retour, transmettre un paquet de données de retransmission à ladite entité réceptrice après le premier laps de temps prédéterminé après avoir reçu ledit message de retour ou abandonner une retransmission dudit paquet de données reçu selon la limitation du message de commande de débit commun.

12. Procédé selon la revendication 11, le procédé comprenant en plus l'étape consistant à demander des ressources pour transmettre un paquet de données de retransmission pour le paquet de données transmis par un message de demande de planification transmis à l'entité réceptrice, si le message de retour indique d'abandonner la retransmission pour ledit paquet de données reçu.

13. Procédé selon la revendication 11, le procédé comprenant en plus l'étape consistant à transmettre un paquet de données de retransmission pour ledit paquet de données transmis à un instant ultérieur selon le mode de planification commandé par le débit et le temps ou le mode de planification commandé par le débit.

14. Station de base pour un système de communication sans fil où un protocole HARQ est utilisé pour retransmettre des données d'un terminal mobile à la station de base à travers un canal de données, la station de base comprenant:
un moyen de réception pour recevoir un paquet de données de l'entité émettrice,
un moyen de traitement pour déterminer si le paquet de données a été reçu avec succès,
où le moyen de traitement est adapté pour déterminer si le niveau d'interférence est supérieur ou égal à un niveau d'interférence seuil prédéterminé, s'il a été déterminé que le paquet de données n'a pas été reçu avec succès,
un moyen émetteur pour transmettre un message de retour au terminal mobile où le message de retour indique au terminal mobile de transmettre un paquet de données de retransmission pour ledit paquet de données reçu après un premier laps de temps prédéterminé après avoir reçu ledit message de retour, si le niveau d'interférence déterminé est inférieur au niveau d'interférence seuil prédéterminé, et
où le message de retour indique au terminal mobile de transmettre un paquet de données de retransmission pour ledit paquet de données reçu après un deuxième laps de temps prédéterminé après avoir reçu ledit message de retour ou d'abandonner une retransmission dudit paquet de données reçu, si le niveau d'interférence déterminé est supérieur ou égal au niveau d'interférence seuil prédéterminé
où la station de base est adaptée pour planifier des transmissions de données d'une pluralité d'entités émettrices comprenant ladite entité émettrice, et
où l'entité émettrice est adaptée pour transmettre un message de commande de débit commun à une pluralité d'entités émettrices comprenant ladite entité émettrice, où le message de commande de débit commun limite le sous-ensemble de combinaison de formats de transmission de chacune de la pluralité d'entités de transmission pour déterminer un débit de données maximal commun à la pluralité d'entités émettrices.

15. Station de base selon la revendication 14, la station de base étant adaptée pour effectuer le procédé selon l'une quelconque des revendications 1 à 8.

16. Terminal mobile pour un système de communication sans fil où un protocole HARQ est utilisé pour retransmettre des données du terminal mobile à une station de base à travers un canal de données, le terminal mobile comprenant:
un moyen émetteur pour transmettre un paquet de données à la station de base (204, 205),
un moyen récepteur pour recevoir un message de retour pour le paquet de données transmis de la station de base, où le message de retour indique à l'entité émettrice si elle doit transmettre un paquet de données de retransmission pour ledit paquet de données transmis après un premier ou un deuxième laps de temps prédéterminé après avoir reçu ledit message de retour, et pour recevoir à travers un canal de commande se rapportant à une planification un message de commande de débit commun, où le message de commande de débit commun limite les sous-ensembles de combinaison de formats de transmission de chacune d'une pluralité d'entités émettrices comprenant ladite entité émettrice pour déterminer un débit de données maximal commun à la pluralité d'entités émettrices,
où le moyen de transmission est adapté pour transmettre en réponse au message de commande de débit commun, un paquet de données de retransmission à ladite station de base après le premier ou le deuxième laps de temps prédéterminés après avoir reçu ledit message de retour en réponse audit message de retour selon la limitation du message de commande de débit commun.

17. Terminal mobile pour un système de communication sans fil où un protocole HARQ est utilisé pour retransmettre des données du terminal mobile à une station de base à travers un canal de données, le terminal mobile comprenant:
un moyen émetteur pour transmettre un paquet de données à la station de base (204, 205),
un moyen récepteur pour recevoir un message de retour pour le paquet de données transmis de la station de base (204, 205), où le message de retour indique au terminal mobile s'il doit transmettre un paquet de données de retransmission pour ledit paquet de données transmis après un premier laps de temps prédéterminé après avoir reçu ledit message de retour ou abandonner une retransmission dudit paquet de données reçu (NACK-H), et pour recevoir à travers un canal de commande se rapportant à une planification un message de commande de débit commun, où le message de commande de débit commun limite les sous-ensembles de combinaison de formats de transmission de chacune d'une pluralité d'entités émettrices comprenant ladite entité émettrice pour déterminer un débit de données maximal commun à la pluralité d'entités émettrices et
où le moyen de transmission est adapté pour transmettre en réponse au message de commande de débit commun, un paquet de données de retransmission à ladite station de base après le premier laps de temps prédéterminé après avoir reçu ledit message de retour ou pour abandonner une retransmission dudit paquet de données reçu en réponse audit message de retour selon la limitation du message de commande de débit commun.

18. Système de communication sans fil dans lequel un protocole HARQ est utilisé pour retransmettre des données depuis un terminal mobile à la station de base à travers un canal de données, le système comprenant au moins une station de base selon l'une des revendications 14 ou 15 et au moins un terminal mobile selon la revendication 16 ou 17.
